Europäisches Patentamt

European Patent Office

Office européen des brevets

(11) Publication number: 0 266 938
A2

## EUROPEAN PATENT APPLICATION

(21) Application number: 87309289.4

(22) Date of filing: 21.10.87

(51) Int. Cl.⁴ B60T 11/16

(30) Priority: 05.11.86 GB 8626436

(43) Date of publication of application:
11.05.88 Bulletin 88/19

(84) Designated Contracting States:
DE FR GB IT

(71) Applicant: LUCAS INDUSTRIES public limited
company
Great King Street
Birmingham, B19 2XF West Midlands(GB)

(72) Inventor: Price, Anthony George
14, Meadow Lane
Croesyceiliog Cwmbran South Wales(GB)

(74) Representative: Waite, Anthony William et al
MARKS & CLERK Alpha Tower Suffolk Street
Queensway
Birmingham B1 1TT(GB)

(54) Pressure cylinder.

(57) A master or slave cylinder for a vehicle brake
actuating system has a pressure cylinder (1), which
may be of plastics material, and a separate flange
component (6) which extends longitudinally around
the cylinder and has portions turned over an open
end of the cylinder to retain the component on the
cylinder and to provide a backstop for a piston
actuating rod 3. Portions of the flange component
extend laterally to provide oppositely extending
flanges (13, 14) serving to secure the cylinder to a
support by the passage of fastening means through
flange apertures (15, 16).

EP 0 266 938 A2

FIG 1

FIG 3

## PRESSURE CYLINDER.

This invention relates to a pressure cylinder, such as a master or slave cylinder, primarily for use in a vehicle hydraulic clutch or brake actuating system, and having a projecting flange for the attachment of the cylinder to a support.

Master cylinders, in particular, are usually mounted in a vehicle by way of a projecting flange which is bolted to a convenient structure, such as a bulkhead for example. Proposals have already been made for providing a flange on a master cylinder of plastics material by moulding it integrally with the pressure cylinder. Because of difficulties arising from differential expansion between the flange, which requires to be relatively thick, and the cylinder wall, which is relatively thin, such proposals are subject to a number of undesirable restraints leading to excessive complication or to positioning of the flange in locations which are less than ideal.

For example, one prior proposal consists of an integrally moulded arrangement in which an additional surrounding cylindrical portion is used to connect the flange to the cylinder at a location outside that portion of the cylinder swept by the piston during the working travel of the latter. This solution requires a complicated moulding and is expensive to produce. A simpler prior proposal is to place the flange towards the open end of the pressure cylinder outside the swept cylinder length, but this places an untoward restriction on the position of the flange.

An object of the present invention is to provide a pressure cylinder, and a method of making it, in which a flange is provided in a simple and convenient manner such as to avoid the problems presented by the aforesaid prior proposals.

According to the present invention, a pressure cylinder assembly comprises a cylinder body and a separate flange component mounted on the body in such a manner as to provide a generally radially projecting flange for the attachment of the assembly to a fixed support, said component also providing a backstop to react return forces on one of a piston slidable in the cylinder bore and an actuating rod (3) for the piston.

In one convenient arrangement, the flange component is in the form of a strap extending longitudinally of the cylinder, the strap having a radially outward projection at a longitudinally intermediate location thereon forming said flange, and a radially inward projection extending across the open end of the cylinder bore to provide said backstop.

The flange component may be a one-piece device having a pair of arms extending longitudinally of the cylinder body and interconnected at one end by a base portion which engages the closed end of the cylinder body, the opposite ends of the arms being turned inwardly in opposite directions across the open end of the cylinder bore to provide said backstop.

In an alternative arrangement, the flange component may be in the form of a pair of generally 'U'-shaped parts extending along the cylinder body from respective ends thereof, with the base of the "U" of one part engaging the closed end of the cylinder body and the base of the "U" of the other part extending across the open end of the cylinder bore and having an opening for the passage therethrough of said actuating rod, the free ends of the arms of each part being turned outwardly and being mutually adjacently disposed in order to form said flange.

One or both of said parts may itself be in two further, preferably identical, parts each of which includes a portion of the base of the "U" and an outwardly turned flange part.

From another aspect of the invention, a method of making a pressure cylinder comprises forming a cylinder body and attaching thereto a separate component which provides a generally radially extending flange for the attachment of the assembly to a support, and a backstop to react return forces on one of and a piston slidable in a bore of the cylinder body and an actuating rod for the piston.

The invention will now be described, by way of example, with reference to the accompanying drawings in which:-

Figure 1 is a perspective view of one form of pressure cylinder of the invention intended for use as a master cylinder;

Figure 2 is an end view of the cylinder of Figure 1;

Figure 3 is a fragmentary cross-section along the line III-III of Figure 1;

Figure 4 is a side view, partly in cross-section, of an alternative embodiment of the invention;

Figure 5 is a view similar to Figure 4 illustrating a further alternative embodiment of the invention, and

Figures 6 is a longitudinal cross-section of another alternative embodiment of the invention.

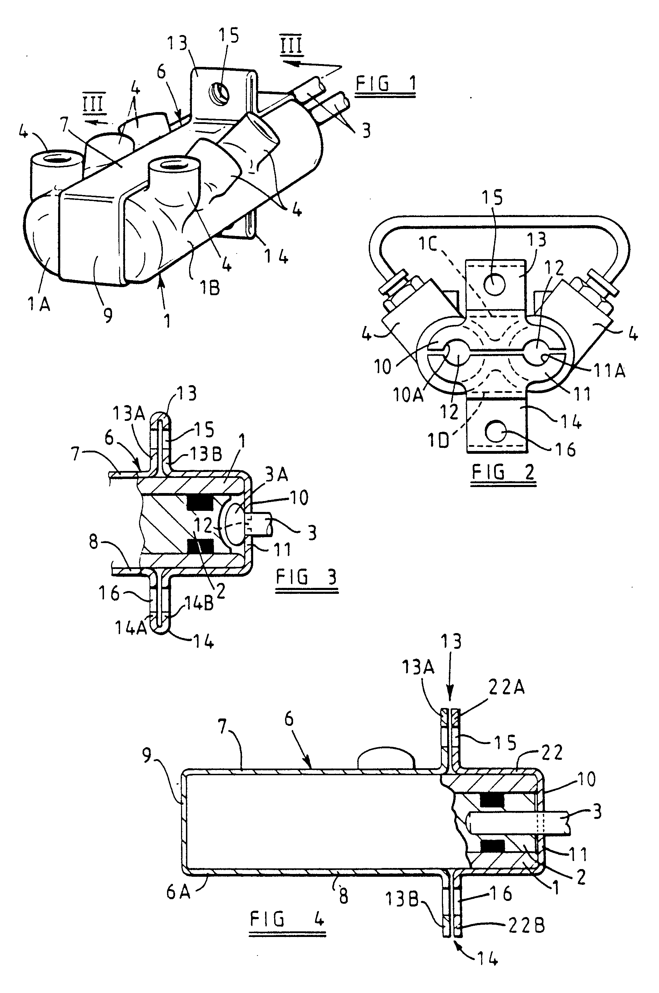

Figures 1 to 3 of the drawings illustrate a pressure cylinder in the form of a dual master cylinder assembly having a body 1, conveniently of plastics material, forming a pair of parallel cylinders 1A, 1B each containing a piston 2 (Figure 3), the pistons being operable by actuating rod 3 to pressurise fluid contained within the cylinders. The internal components of the cylinders may be of any convenient conventional form according to the usual practical requirements and intended manner of use. Conduit connection bosses 4 are provided to enable the cylinder to be connected into an hydraulic braking system, in conventional manner.

A one-piece flange component is provided in the form of a strap 6 having a pair of elongate arms 7 and 8 which lie against opposite sides of the cylinder assembly, said sides having flattened surfaces 1C, 1D for engagement by the arms 7, 8 so as to provide firm support and rotational restraint for the arms. Additionally, or alternatively, rotational restraint may be afforded by engagement of the arms with the bosses 4. One end of the strap has a base 9 which lies against an end wall of the cylinder assembly, and free end portions 10 and 11 at the other end of the strap are turned inwardly across the open ends of the cylinders 1A, 1B. As will be seen from Figure 2, the opposed edges of the portions 10 and 11 are provided with arcuate recesses 10A, 11A which form apertures 12 for passage therethrough of the rods 3, each rod having an enlarged inner end portion 3A (Figure 3) of larger cross-section than the aperture 12 so that the rod is prevented from complete withdrawal from the cylinder by engagement of the head 3A against the portions 10, 11.

At an intermediate location in its length, the strap 6 is deformed radially outwardly to form a pair of integral flanges 13, 14 in which apertures 15, 16 are provided for the passage of fixing bolts or the like to enable the assembly to be secured, in use, to a suitable support, such as a vehicle bulkhead for example. The deformation of the strap is such that each flange 13, 14 is composed of a pair of parallel arms respectively 13A, 13B, 14A, 14B joined together at their radially outermost extent.

The arrangement illustrated is extremely simple and effective and particularly advantageous when used with a plastic pressure cylinder assembly in that it enables a flange to be provided as a separate part and thereby obviates problems arising from attempting to mould the flange integrally with the cylinder. The arrangement described is particularly advantageous in that the strap is locked on the cylinder rotationally by the surfaces 1C, 1D and also longitudinally by virtue of the base 9 engaging an end of the cylinder and the inturned portions 10, 11 engaging the other end thereof. The strap also provides a particularly convenient means for providing a backstop for the actuating rods 3 without the provision of additional components, such as circlips. Moreover, the arrangement is inherently strong since forces developed on the cylinder during its operation are transmitted by the strap to the fixed support.

It is possible for the strap to comprise a plurality of component parts and Figure 4 illustrates a first embodiment using this principle. In this embodiment, the strap 6 has a first generally U-shaped portion 6A which incorporates the base 9 engaging the closed end of a single cylinder although it may be applied in suitably modified form to a cylinder assembly similar, for example, to that of Figures 1 to 3. The free ends of the strap portion 6A are turned outwardly to form flange portions 13A, 13B. A second strap portion 22 is provided on the cylinder portion adjacent its open end, the strap portion 22 being provided with out-turned flanges 22A, 22B which are brought into opposed relationship with the flanges 13A, 13B, in order to form the fixing flanges 13, 14. Portions 10 and 11 of the strap portion 22 are bent inwardly over the open end of the cylinder, as before, to provide longitudinal restraint for the time they provide retention means for the piston itself, of which the outer end engages the portions 10 and 11. The rod 3 passes with clearance through the portions 10, 11 and extends into the piston engaging the latter by way of a rounded end 3B. The strap portions are retained in assembled condition by fixing bolts passing through holes 15, 16 to mount the flange on a fixed support. Alternatively, or additionally, the portions may be secured together by additional screws and/or glueing or bonding.

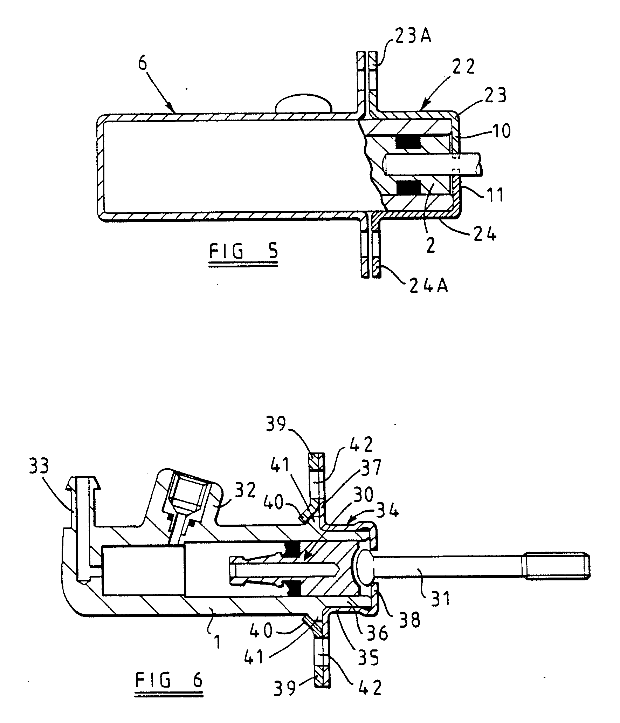

The embodiment of Figure 5 is similar to that of Figure 4, except that the strap portion 22 is formed in two separate parts 23, 24, each of which has a respective flange portion 23A, 24A and each of which also has a respective one of the turned in portions 10, 11.

An alternative flange arrangement is illustrated in relation to the pressure cylinder shown in Figure 6 which includes a cylinder 1 containing a piston assembly 30 of any convenient type slidable therein under the action of a force input rod 31. The cylinder has a port connection boss 32 for connection, in use, to a fluid reservoir and an integral outlet pipe 33 for connection to a vehicle braking system.

In this embodiment, the flange component is in three initially separate parts. One part, 34 has a cylindrical portion 35 dimensioned to surround a reduced diameter end portion 36 of the cylinder, and, a peripheral outwardly projecting flange portion 37. The end part 38 of the cylindrical portion 35 remote from the flange portion 37 is inwardly directed to provide retention means for the actuating rod 31. The other two parts of the flange component are identical plates 39, each having an end portion 40 bent out of the plane thereof. The cylinder 1 has a pair of outward projections 41 and the flange component is assembled by placing the cylindrical portion 35 over the cylinder end portion 36 with the flange 37 engaging the projections 41, and placing the flange plates 39 in engagement with the flange 37 with their end portions 40 respectively against the opposite sides of the projections 41. The plates 39 are then secured to the flange 37, by rivetting, welding, bonding, or other convenient method to complete the flange component.

With the flange component so assembled, the cylinder may be secured to a support by fixing bolts passed through flange apertures 42. The flange plates 39 are advantageously of thicker material than the flange part 34 since they are required to sustain the substantial input load applied to the cylinder via the rod 31.

As an alternative to the three part flange component of Figure 6, the component may be integrally formed, as by pressing and the flanges formed as double walled formations similar to those shown at 13, 14 in Figure 1.

In a further alternative arrangement, a flange component of the general kind shown in Figure 6 is split longitudinally and has the flange plates already connected to their respective part-cylindrical portions. The two half flange components are placed onto the cylinder in two diametrically opposed positions with the end portions 40 behind the projections 41 as before and secured in position by a clamp or clip which may conveniently surround the cylindrical part 35. Such a clamp or clip may also advantageously retain in position a surrounding boot extending between the rod 31 and the part 35.

A further possibility for flange attachment is to use a flange component generally similar to that of Figure 6 and to provide an interrupted peripheral flange on the cylinder such that the projections 41 may pass through the flange gaps and the flange component then rotated to bring the flange projections into register with solid portions of the cylinder for axial retention of the flange component. The flange can then be fixed against rotation, as for example by fixing it to a support by passing bolts through the holes 42, in order to connect it permanently to the cylinder.

In all embodiments of the invention, the retaining portions 10, 11 (Figures 1 to 5) and 38 (Figure 6) may either be used to retain the rod or the piston, as variously illustrated in the drawings.

It will be understood that the use of a separate flange component in accordance with the invention, whilst particularly beneficial when used with a plastics cylinder body can nevertheless be employed with cylinder bodies formed from other materials such as aluminium. In the latter case, advantage is derived from the resulting relative simplicity of the casting required when it is no longer necesssary to incorporate an integral flange. The flange component is conveniently of metal but other materials such as rigid plastics are not excluded.

## Claims

1. A pressure cylinder assembly comprising a cylinder body (1) defining a cylinder bore, and being characterised by a separate flange component (6) mounted on the body in such a manner as to provide a generally radially projecting flange (13, 14) for the attachment of the assembly to a fixed support, said component (6) also providing a backstop (10, 11) to react return forces on one of a piston (2) slidable in the cylinder bore and an actuating rod (3) for the piston.

2. A pressure cylinder assembly according to Claim 1 characterised in that the flange component is in the form of a strap (6) extending longitudinally of the cylinder body (1), the strap having a radially outward projection (13, 14) at a longitudinally intermediate location thereon forming said flange, and a radially inward projection (10, 11) extending across the open end of the cylinder bore to provide said backstop.

3. A pressure cylinder assembly according to Claim 1 or Claim 2 characterised in that the flange component (6) is a one-piece device having a pair of arms (7, 8) extending longitudinally of the cylinder body and interconnected at one end by a base portion (9) which engages the closed end of the cylinder body, the opposite ends of the arms (10, 11) being turned inwardly in opposite directions across the open end of the cylinder bore to provide said backstop.

4. A pressure cylinder assembly according to Claim 1 characterised in that the flange component is in the form of a pair of generally 'U'-shaped parts (6A, 22) extending along the cylinder body from respective ends thereof, with the base (9) of the "U" of one part engaging the closed end of the cylinder body and the base of the "U" (10) of the other part extending across the open end of the cylinder bore and having an opening (12) for the passage therethrough of said actuating rod (3), the free ends (13A, 13B, 22A, 22B) of the arms of each part being turned outwardly and being mutually adjacently disposed in order to form said flange (13).

5. A pressure cylinder assembly according to Claim 4 characterised in that one or both of said parts is itself in two further parts (23, 24), each of which includes a portion (10, 11) of the base of the "U" and an outwardly turned flange part (23A, 24A).

6. A pressure cylinder assembly according to Claim 5 characterised in that said two further parts (23, 24) are identical.

7. A pressure cylinder assembly according Claim 1 characterised in that the flange component (34) includes a first part having a cylindrical portion (35) closely surrounding the cylinder body (1) adjacent the open end of the bore, said first part providing a first flange element (37) and a radially inwardly extending projection (38) forming said backstop, the flange component also including at least one second part (39) providing a further flange element juxtaposed with said first flange element (37) to form said flange, the first and second parts of the flange component lying to either side of a generally radial projection (41) carried by the body (1) so as to clamp said body projection (41) when the first and second parts of the flange component are secured together, thereby securing the flange component to the cylinder body.

8. A pressure cylinder assembly according to any one of the preceding claims characterised in that the flange component (6, 34) is engaged by the actuating rod (3, 31) when the latter is in its retracted position.

9. A pressure cylinder assembly according to any one of the preceding claims characterised in that the flange component (6, 34) is engaged by the piston (2) when the latter is in its retracted position.

10. A method of making a pressure cylinder assembly according to any one of the preceding claims comprises forming a cylinder body (1) and attaching thereto a separate component (6, 34) which provides a generally radially extending flange (13, 37, 39) for the attachment of the assembly to a support, and a backstop (10, 11) to react return forces on one of a piston slidable in a bore of the cylinder body and an actuating rod for the piston.

FIG 1

FIG 2

FIG 3

FIG 4

FIG 5

FIG 6